# EUROPEAN PATENT APPLICATION

(11) **EP 4 589 331 A1**
(43) Date of publication of application: **23.07.2025**
(21) Application number: 24152677.1
(22) Date of filing: 18.01.2024
(51) Int. Cl.: G01S 7/35, G01S 13/34, G01S 13/58, G01S 13/931

(54) **NESTED-FMCW (N-FMCW) MODULATION**

(71) Applicant: GM Cruise Holdings LLC, San Francisco, CA 94107 (US)
(72) Inventor: SANSON, Jessica Bartholdy, 85521 Ottobrunn (DE); GUARÍN ARISTIZABAL, Gustavo Adolfo, 85521 Ottobrunn (DE); GÜTLEIN-HOLZER, Johanna, 85521 Ottobrunn (DE); JÁCOME MUÑOZ, Jorge Julio, 85521 Ottobrunn (DE)
(74) Representative: Manitz Finsterwald Patent- und Rechtsanwaltspartnerschaft mbB

(57) **Abstract**

A radar sensor comprises a transmit antenna configured to transmit a nested frequency modulated continuous wave (N-FMCW) radar waveform; a receive antenna that receives a radar return; and a hardware logic component that is configured to perform various acts. The acts comprise generating the N-FMCW radar waveform for transmission by the transmit antenna, receiving from the receive antenna a radar signal comprising the N-FMCW waveform, and sampling the N-FMCW waveform to obtain analog-to-digital (ADC) samples, the acts further comprise performing coarse range and velocity estimation for a detected object using ADC samples from ramps in the ramp groups, and performing fine range and velocity estimation using the output of the coarse range and velocity estimation. Additionally, the acts comprise outputting a coarse range and velocity map from coarse range and velocity estimation information and outputting a fine range and velocity map from fine range and velocity estimation information.

## Description

### BACKGROUND

Autonomous or assisted driving strategies have been facilitated through sensing an environment around a vehicle. Radar sensors are conventionally used in connection with detecting and classifying objects in an environment; advantages of radar over other types of sensors (such as cameras or lidar) include robustness in regard to lighting and weather conditions. Often, radar sensors are deployed with cameras and/or lidar sensors to provide different modes of detection and redundancy. In certain scenarios, performance of lidar and/or cameras is negatively impacted by environmental features, such as fog, rain, snow, bright sunlight, lack of adequate light, etc. Accordingly, in these scenarios, radar is relied heavily upon to detect and classify objects in the environment, while lidar and camera sensors are less heavily relied upon.

In connection with navigating an environment, an autonomous vehicle perceives objects surrounding the autonomous vehicle based upon sensor signals generated by sensor systems of the autonomous vehicle. For example, the autonomous vehicle may include a sensor system, such as a radar sensor system, for generating sensor signals. The autonomous vehicle also includes a centralized processing device that receives data based upon sensor signals generated by the sensor system and performs a variety of different tasks, such as detection of vehicles, pedestrians, and other objects. Based on an output of the processing device, the autonomous vehicle may perform a driving maneuver.

Radar sensor systems exhibit some advantages over other sensor systems such as lidar sensor systems and cameras with respect to their usage in autonomous vehicles. For instance, compared to cameras and lidar sensor systems, performance of radar sensor systems is more invariant to weather changes, such that data generated by a radar sensor system can be used to enable autonomous driving under certain weather conditions (such as heavy rain or snow). In addition, radar sensor systems are able to capture velocity information nearly instantaneously. Further, radar sensor systems have a greater range than cameras and lidar sensor systems.

Radar sensor systems emit radar signals into a surrounding environment. The radar sensor signals reflect off objects in the environment and the radar system then detects the reflected radar signals. Conventionally, the radar sensor system is configured to construct data tensors based upon the reflected radar signals, where a data tensor has bins across several dimensions. Example dimensions include range, doppler, and beam. The radar sensor system then generates point clouds based upon the data tensors and transmits the point clouds to the centralized processing device, where the centralized processing device identifies objects in the environment of the autonomous vehicle based upon the point clouds.

Range resolution of a radar sensor system is a function of the bandwidth of a radar signal transmitted by the radar sensor system. All else being equal, employing a wider bandwidth radar signal to be transmitted by the radar sensor system generally provides a finer range resolution (as compared to range resolution provided by a radar sensor system that utilizes a narrower bandwidth radar signal). In various applications, such as radar sensor systems of vehicles (e.g., autonomous vehicles), it is desired to have relatively fine range resolution; thus, such systems commonly employ relatively wide bandwidth radar signals.

However, as bandwidth of radar signals to be transmitted by conventional radar sensor systems increases, unambiguous velocity detectable by such radar sensor systems typically decreases. A relatively low pulse repetition interval (PRI) can generally allow for a relatively large unambiguous velocity detection range. Yet, as noted above, relatively wider bandwidth radar signals are utilized to achieve finer range resolutions. Due to limitations of analog to digital converter (ADC) sampling rates, increasing the bandwidth of the radar signals can result in increasing the PRI of the radar signals, which in turn decreases the unambiguous velocity detection range. Thus, due to hardware limitations, conventional radar sensor systems oftentimes are unable to provide relatively fine range and angular resolution while also providing relatively high unambiguous velocity detection range.

### SUMMARY

The following is a brief summary of subject matter that is described in greater detail herein. This summary is not intended to be limiting as to the scope of the claims.

Described herein are various technologies relating to generating, employing, and processing nested frequency modulated continuous wave (N-FMCW) waveforms to provide high range and angular resolution concurrently with a large unambiguous velocity detection range in radar systems. According to various aspects, the N-FMCW waveform comprises a plurality of virtual ramps. Each virtual ramp comprises a plurality of ramp groups. Each ramp group comprises a plurality of ramps. The ramps and the virtual ramps can be modulated to have similar waveforms (e.g., shape, pulse rate interval (PRI), etc.), or may have different waveforms. For example, the ramps in the ramp groups maybe generated to have a positive sawtooth pattern with a given PRI, and the virtual ramps comprising the ramp groups can also have a positive sawtooth pattern with the same (or different) PRI. The ramps in the ramp groups can be allocated a predetermined amount of bandwidth (e.g., 0.1 GHz, 0.3 GHz, 0.5 GHz, 1.0 GHz, etc.), where contiguous ramp groups in a virtual ramp are allocated different bandwidth segments that are contiguous. According to an example, when the virtual ramp waveform is a sawtooth waveform, the virtual ramp has a bandwidth equal to the sum of the bandwidth segments allocated to the ramp groups in the virtual ramp.

In another embodiment, the ramps and the ramp groups are configured to have a different waveform than the virtual ramps that comprise the ramp groups. For example, the ramps in the ramp groups may be configured to have a first pattern (e.g., positive sawtooth, negative sawtooth, triangle, etc.), while the virtual ramps are configured to have a second pattern that is different from the first pattern.

The N-FMCW waveform is transmitted by the radar sensor into an operational environment of the sensor. The radar sensor receives a radar return reflected from a target object in the operational environment of the radar sensor and processes the returned N-FMCW signal using the ramps in the ramp groups for coarse range and velocity (also referred to herein as "Doppler") estimation and using the virtual ramps for fine range and velocity (Doppler) estimation. For example, an analog-to-digital converter (ADC) samples that received radar signal waveform for all virtual ramps. The sensor (e.g., via one or more processors) performs four different fast Fourier transforms (FFT): one for coarse range estimation, one for coarse velocity estimation, one for fine range estimation, and one for fine velocity estimation. The sensor performs a coarse range estimation using ADC samples from each ramp in all ramp groups. For coarse velocity estimation, the sensor executes a coarse velocity FFT using ADC samples for all ramps in one ramp group. This FFT is repeated for all ramp groups.

For fine range estimation, the sensor executes a fine range FFT using each coarse range and Doppler cell for all ramp groups in a virtual ramp, for all virtual ramps. For fine velocity estimation with range cell migration, the sensor executes a fine velocity FFT using each coarse range and Doppler cell across all virtual ramps. The output of the coarse range and velocity FFTs can be used to generate a coarse range and velocity map, and the output of the fine range and velocity FFTs can be used to generate a fine range and velocity map. In this regard, the output of the coarse range and velocity FFTs can be used as input for the fine range and velocity FFTs.

The above summary presents a simplified summary in order to provide a basic understanding of some aspects of the systems and/or methods discussed herein. This summary is not an extensive overview of the systems and/or methods discussed herein. It is not intended to identify key/critical elements or to delineate the scope of such systems and/or methods. Its sole purpose is to present some concepts in a simplified form as a prelude to the more detailed description that is presented later.

### BRIEF DESCRIPTION OF THE DRAWINGS

Fig. 1 is a functional block diagram of an exemplary radar sensor.
Fig. 2 shows the hardware logic component, in accordance with various aspects described herein.
Fig. 3 illustrates a methodology for generating and transmitting a nested FMCW signal, in accordance with various aspects described herein.
Fig. 4 illustrates a methodology for processing nested FMCW signals, in accordance with various features described herein.
Fig. 5 illustrates a nested FMCW radar chirp waveform, in accordance with various features described herein.
Fig. 6 illustrates an enlarged view of the ramp groups, in accordance with various aspects described herein.
Fig. 7 shows a coarse range and Doppler map.
Fig. 8 shows a fine range and Doppler map.
Fig. 9A shows a simple ramp waveform that can be employed for the ramp groups and/or the virtual ramps described herein.
Fig. 9B shows a negative ramp waveform that can be employed for the ramp groups and/or the virtual ramps described herein.
Fig. 9C shows a triangle waveform that can be employed for the ramp groups and/or the virtual ramps described herein.
Fig. 9D shows a partially offset ramp waveform that can be employed for the ramp groups and/or the virtual ramps described herein.
Fig. 9E shows a fully offset ramp waveform that can be employed for the ramp groups and/or the virtual ramps described herein.
Fig. 9F shows another example of a partially offset ramp waveform, that can be employed for the ramp groups and/or the virtual ramps described herein.
Fig. 9G shows another example of a fully offset ramp waveform that can be employed for the ramp groups and/or the virtual ramps described herein.
Fig. 10 is a functional block diagram of an exemplary AV.
Fig. 11 is an exemplary computing system.

### DETAILED DESCRIPTION

Various technologies pertaining to mitigating interference in high resolution radar systems are described herein. In the following description, for purposes of explanation, numerous specific details are set forth in order to provide a thorough understanding of one or more aspects. It may be evident, however, that such aspect(s) may be practiced without these specific details. In other instances, well-known structures and devices are shown in block diagram form in order to facilitate describing one or more aspects. Further, it is to be understood that functionality that is described as being carried out by certain system components may be performed by multiple components. Similarly, for instance, a component may be configured to perform functionality that is described as being carried out by multiple components.

Moreover, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

Further, as used herein, the terms "component" and "system" are intended to encompass computer-readable data storage that is configured with computer-executable instructions that cause certain functionality to be performed when executed by a processor. The computer-executable instructions may include a routine, a function, or the like. It is also to be understood that a component or system may be localized on a single device or distributed across several devices. Further, as used herein, the term "exemplary" is intended to mean serving as an illustration or example of something and is not intended to indicate a preference.

With regard to the problems solved by the aspects disclosed herein, achieving high range and angular resolution simultaneously with large unambiguous velocity range in FMCW radars is challenging due to hardware limitations (e.g., analog-to-digital converter (ADC) sampling rates, etc.) Since high range resolution is associated with larger ramp bandwidth, and a large unambiguous velocity span is associated with a low pulse rate interval (PRI), it is desirable that the ramps in a transmit signal be steep. This, in turn, makes a high ADC sampling rate desirable to achieve a large maximum range.

Radar processing latency in automotive radars refers to the time it takes for the radar system to process the received signals and generate actionable information for various applications such as collision avoidance, adaptive cruise control, and object detection in real-time driving scenarios. Minimizing processing latency is therefore desirable in order to ensure timely and accurate responses in automotive radar systems.

To overcome these problems and others, the described aspects relate to a technique that facilitates providing concurrent high range resolution and high unambiguous velocity detection range. Reducing PRI can compromise the range in which unambiguous velocity can be detected. Radar systems using a large PRI are subject to a diminished unambiguous velocity range of detection. In order to overcome this deficiency of conventional approaches, the described systems and methods utilize a nested FMCW waveform. The technique involves performing FMCW modulation within an FMCW modulated waveform. This is also referred to herein as "inner" FMCW modulation. In one embodiment, an FMCW modulated waveform can have one or more inner FMCW modulations. Range and Doppler (velocity) estimation is performed using four fast Fourier transforms (FFT): two FFTs for coarse range and Doppler estimation and two FFTs for fine range and Doppler estimation. This manner of processing also decreases radar latency.

The described nested waveform provides the range and Doppler resolution of the entire transmitted band and transmission time (using the external FMCW modulation) as well as the high unambiguous velocity detection range achieved using shorter transmitted ramps (using the internal or "nested" FMCW modulation). In this manner, processing complexity at latency are reduced and signal-to-noise ratio (SNR) and magnitude losses are mitigated. Additionally, the nested modulation technique described herein mitigates phase noise because large jumps between chirps are not required due to the small bandwidth employed. Therefore, a need for a conventional, wider phase-locked loop (PLL) bandwidth is mitigated.

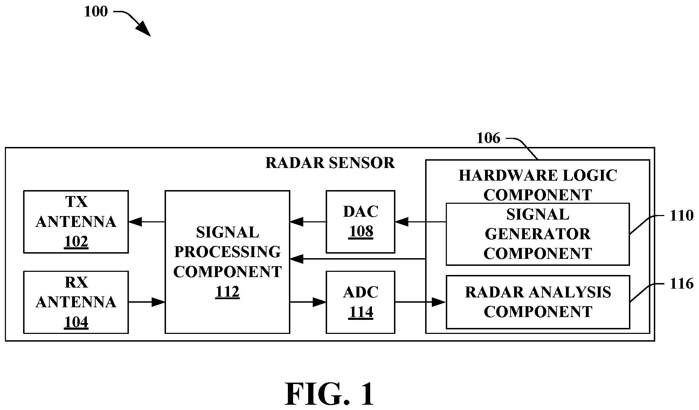

With reference now to Fig. 1, an exemplary radar sensor 100 is illustrated, in which various features, circuits, etc. described herein can be employed. The radar sensor 100 includes a transmit antenna 102, a receive antenna 104, and a hardware logic component 106. Briefly, the hardware logic component 106 is configured to prepare radar signals that are transmitted by the transmit antenna 102, and to compute target solutions indicating estimated positions and/or velocities of objects based upon radar returns received by the receive antenna 104. In exemplary embodiments, various components of the radar sensor 100 can be integrated as a same system-on-a-chip (SoC). In various embodiments, the radar sensor 100 can be employed on a vehicle, such as a land vehicle, an aircraft, a watercraft, etc., to identify positions and velocities of objects in the operational environment of the vehicle.

The radar sensor 100 further comprises one or more digital-to-analog converters (DACs) 108. The hardware logic component 106 comprises a signal generator component 110 that prepares radar signals for transmission by way of the transmit antenna 102. The signal generator component 110 is configured to control the DAC 108 to cause the DAC 108 to generate an analog radar signal for transmission by the transmit antenna 102. In other words, the signal generator component 110 generates digital values that, when received by the DAC 108, cause the DAC 108 to output an analog radar signal having various desired signal characteristics. Hence, the radar sensor 100 is configured as a digitally modulated radar sensor, wherein characteristics of radar signals output by the transmit antenna 102 are digitally controlled by the signal generator component 110 of the hardware logic component 106. For example, the signal generator component 110 can be configured to control the DAC 108 such that the radar sensor operates as a phase modulated continuous wave (PMCW) radar sensor, a frequency modulated continuous wave (FMCW) radar sensor, or the like.

The radar sensor 100 further includes an analog signal processing component 112. The signal processing component 112 is generally configured to perform various analog signal processing operations on analog signals that are to be output by the transmit antenna 102 and/or that are received by the receive antenna 104. By way of example, and not limitation, the signal processing component 112 can amplify a radar signal output by the DAC 108 to increase the power of the radar signal prior to transmission by way of the transmit antenna 102. In a further example, the signal processing component 112 can be configured to mix a radar signal output by the DAC 108 with a carrier signal to shift a center frequency of the radar signal. The signal processing component 112 can include any of various components that are configured to perform these various functions. For example, the signal processing component 112 can include mixers, amplifiers, filters, or the like. Functionality of the signal processing component 112 and its constituent components can be controlled by the hardware logic component 106. The transmit antenna 102 receives processed radar signals from the signal processing component 112 and emits the radar signals into an operational environment of the radar sensor 100.

The receive antenna 104 receives radar returns from the operational environment. In exemplary embodiments, the radar returns received by the receive antenna 104 comprise reflections, from objects in the operational environment of the sensor 100, of radar signals emitted by the transmit antenna 102. It is to be understood that the radar returns received by the receive antenna 104 can further include reflections of radar signals emitted by other radar emitters that are active within the operational environment of the radar sensor 100. Responsive to receipt of radar returns from the operational environment of the sensor 100, the receive antenna 104 outputs an electrical signal that is indicative of the received radar returns. This electrical signal is referred to herein as a radar signal and is transmitted along one or more transmission lines in the radar sensor 100, as distinct from radar returns that are received by the receive antenna 104 as radiated signals propagating through air or free space in the operational environment of the radar sensor 100.

The signal processing component 112 receives a radar signal from the receive antenna 104. The signal processing component 112 is configured to perform various analog signal processing operations over radar signals received from the receive antenna 104. By way of example, and not limitation, the signal processing component 112 can perform various mixing, filtering, and amplification operations on radar signals output by the receive antenna 104. The signal processing component 112 can be configured to perform various of these signal processing operations (e.g., mixing) based further upon a radar signal transmitted by the transmit antenna 102.

The radar sensor 100 further comprises one or more analog-to-digital converters (ADCs) 114 that receives a processed radar signal from the signal processing component 112. The ADC 114 digitally samples the radar signal and outputs digital values that are indicative of amplitude of the radar signal over time. These digital values are collectively referred to herein as radar data. The radar data output by the ADC 114 are indicative of the radar returns received by the receive antenna 104.

The hardware logic component 106 receives the radar data from the ADC 114. The hardware logic component 106 further comprises a radar analysis component 116. The radar analysis component 116 is configured to compute positions and/or velocities of targets in the operational environment of the radar sensor 100 based upon the radar data. In a non-limiting example, the radar analysis component 116 can compute a range, a bearing, and/or a velocity of a target in the operational environment of the sensor 100 based upon the radar data.

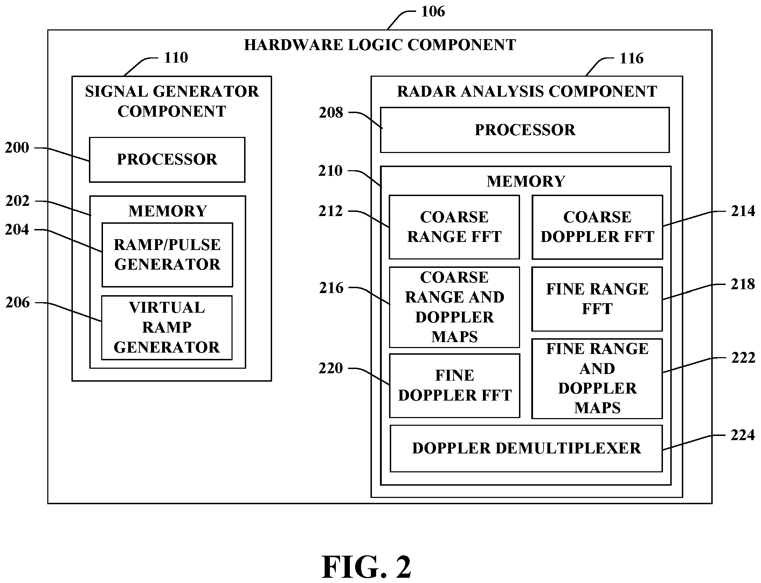

With reference now to Fig. 2, a more detailed view of the hardware logic component 106 is illustrated, in accordance with various aspects described herein. The hardware logic component 106 comprises the signal generator component 110 and the radar analysis component 116, as discussed with regard to Fig. 1. The signal generator component 110 comprises a processor 200 and a memory 202 configured to provide certain functionality as described herein. For example, the memory 202 can store computer-executable instructions that, when executed by the processor 200, cause the signal generator component 110 to perform certain acts. The memory 202 comprises a ramp/pulse generator component 204 and a virtual ramp generator component 206. The ramp/pulse generator component 204 generates ramps/pulses (depending on the type of radar system) for transmission. In one embodiment, the ramp/pulse generator component 204 performs time division multiplexing and/or frequency division multiplexing on the signals to be transmitted.

The ramp/pulse generator component 204 (e.g., an oscillator or the like) generates ramp groups, each comprising a plurality of ramps (e.g., 8, 10, 16, 17, 32, or some other predetermined number of ramps). In one embodiment, each ramp group is transmitted over a different segment of bandwidth. The virtual ramp generator component 206 combines ramp groups to generate virtual ramps. In one embodiment, the virtual ramp generator component 206 combines ramp groups such that contiguous ramp groups are transmitted over contiguous bandwidth segments. These combined ramp groups form a virtual ramp. A plurality of virtual ramps is cyclically transmitted into the operational environment as an N-FMCW waveform.

The radar analysis component 116 comprises a processor 208 and a memory 210 configured to provide certain functionality as described herein. For example, the memory 210 can store computer executable instructions that, when executed by the processor 208, cause the radar analysis component 116 to perform certain acts. The memory 210 comprises a plurality of components for estimating and/or calculating radar data parameters (e.g., range, Doppler/velocity, etc.). For instance, a coarse range fast Fourier transform (FFT) component 212 is provided, which performs a coarse range FFT on received radar data to generate coarse range data. The coarse range FFT is applied to all ramps in all ramp groups in all virtual ramps. A coarse Doppler FFT component 214 executes a coarse Doppler FFT on all coarse range cells, using all ramps in each ramp group (i.e., for all ramp groups). Once the coarse range and Doppler data are generated for each ramp group, a coarse range and Doppler map 216 can be generated for each ramp group.

A fine range FFT component 218 executes a fine range FFT for all range/Doppler coarse cells, using all ramp groups in a virtual ramp until all virtual ramps have been processed. A fine Doppler FFT component 220 executes a fine Doppler FFT for all fine range cells, using each coarse range/Doppler cell for all virtual ramps. One or more fine range and Doppler maps are generated after execution of the fine range FFT and fine Doppler FFT. In this manner, the ramp groups are used in a fashion similar to using ADC samples in a ramp for range estimation, and the virtual ramps are the ramps used for fine velocity estimation.

The time between the beginning of one pulse and the start of the second pulse is called pulse-repetition time (PRT). To design the waveform, the unambiguous velocity and range values define the ramps for each group, and the range and velocity resolution define the virtual ramps of the second modulation. So using a hardware system with a sampling frequency of Fₛ, to cover an unambiguous velocity of Vₘₐₓ and a range of Rₘₐₓ, a PRT = c/(Vₘₐₓ*f_{c}) is used. The number of samples in each ramp is N = Fₛ/PRT; and for the coarse range resolution (Δr) is Δr_{coarse} = Rₘₐₓ/N.

The bandwidth (bw) and the slope (K) of the ramp on each block can be defined as bw = c/(2*Δr ) and K = bw/T_{Ramp} respectively (where T_{Ramp} is the period of the ramp). The velocity resolution (Δv) and the number of ramps (M) in each group can be defined without any restriction as Δv_{coarse} = 2*(M*PRT)c/f_{c}. The virtual ramps are designed using the desired final range and velocity resolutions, so to cover a final range resolution of Δrᵥᵢᵣₜᵤₐₗ, B = Δr_{coarse}/Δrᵥᵢᵣₜᵤₐₗ blocks of ramps are used. V = (Δv_{coarse}/B)/Δvᵥᵢᵣₜᵤₐₗ) virtual ramps are used to cover a desired velocity resolution of Δvᵥᵢᵣₜᵤₐₗ.

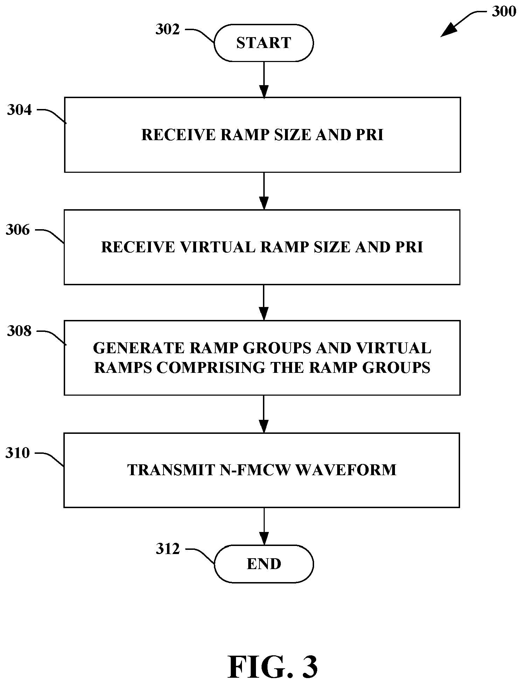

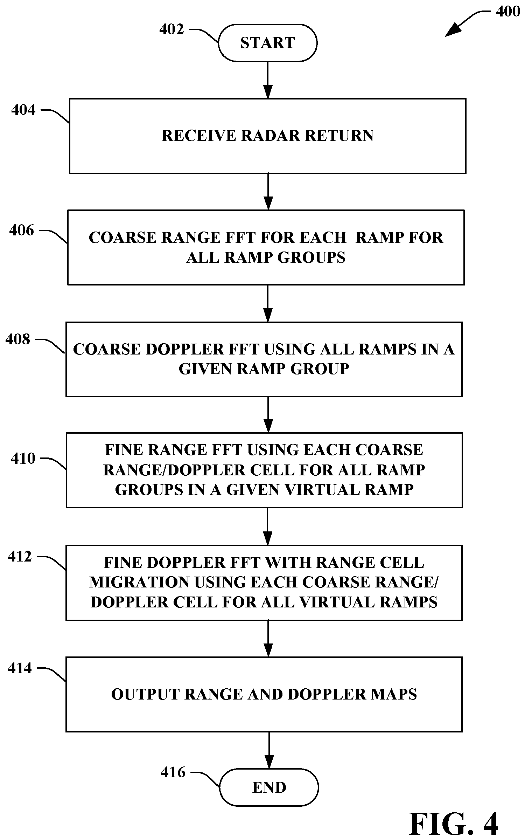

The memory 210 further comprises a Doppler demultiplexer 224 that demultiplexes the processed signal to correctly estimate the velocity and position of the target. Figures 3 and 4 further detail the functionality provided by the hardware logic component 106.

Figs. 3 and 4 illustrate exemplary methodologies relating to transmitting, receiving, and processing nested FMCW radar signals. While the methodologies are shown and described as being a series of acts that are performed in a sequence, it is to be understood and appreciated that the methodology is not limited by the order of the sequence. For example, some acts can occur in a different order than what is described herein. In addition, an act can occur concurrently with another act. Further, in some instances, not all acts may be required to implement a methodology described herein.

Moreover, the acts described herein may be computer-executable instructions that can be implemented by one or more processors and/or stored on a computer-readable medium or media. The computer-executable instructions can include a routine, a sub-routine, programs, a thread of execution, and/or the like. Still further, results of acts of the methodology can be stored in a computer-readable medium, displayed on a display device, and/or the like.

Turning now solely to Fig. 3, a methodology 300 is illustrated for generating and transmitting a signal (e.g., N-FMCW or the like), in accordance with various aspects described herein. At 302, the method begins. At 304, ramp size (e.g., bandwidth) information and pulse rate interval (PRI) are determined or received for ramps in the ramp groups. At 306, virtual ramp size (e.g., bandwidth) information and PRI are determined or received. In one embodiment, size of the virtual ramp (e.g., the bandwidth spanned by the virtual ramp) is equal to the bandwidth spanned by all ramp groups in the virtual ramp. At 308, the virtual ramps are generated and comprise multiple ramp groups. At 310, the N-FMCW waveform is transmitted. At 312, the method terminates.

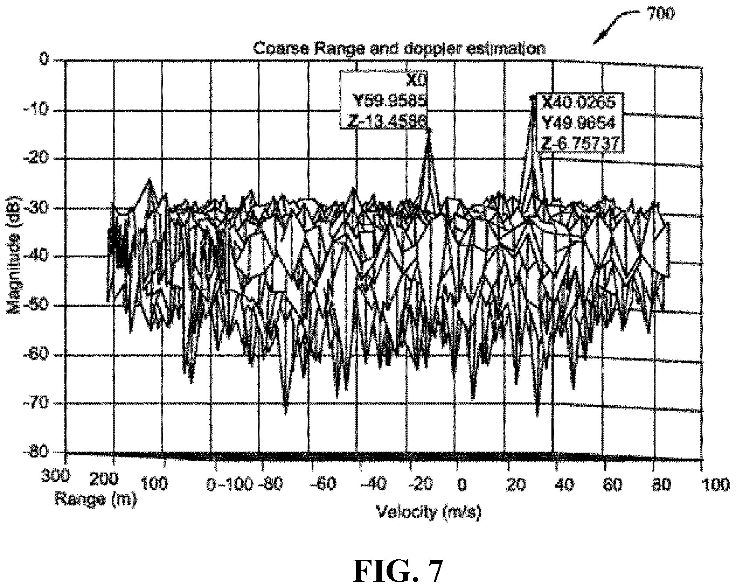

Turning now to Fig. 4, a methodology 400 is illustrated for processing nested FMCW signals, in accordance with various features described herein. At 402, the method begins. At 404, a radar return comprising an N-FMCW waveform is received. At 406, a coarse range FFT is executed on each ramp in all ramp groups for coarse range estimation. At 408, a coarse Doppler FFT is executed on all ramps in a given ramp group, for all ramp groups for coarse velocity estimation. At this point, each ramp group can be used to generate a coarse range and Doppler map (see Fig. 7). At 410, a fine range FFT is executed using each coarse range/Doppler cell for all ramp groups in a given virtual ramp for fine range estimation. At 412, a fine range Doppler FFT is executed on each coarse range/Doppler cell for all virtual ramps for fine velocity estimation. Range and Doppler maps are output at 414. The method terminates at 416.

The processing described with regard to Fig. 4 can use FFTs as described above, or, in another embodiment, can employ discrete Fourier transforms (DFT). According to one feature, after estimating the coarse range/Doppler information for each ramp group, the fine range/Doppler processing can begin. Once each ramp group is processed, it can be added to the previously processed ramp groups using, e.g., a DFT/sum matrix (or an FFT/sum matrix in the case of FFTs) in order to reduce the reading of memory for fine range/Doppler processing.

According to another feature, each coarse range/Doppler cell can be coherently or non-coherently summed, and a target pre-detection process can be performed, after which only detected targets are processed for fine range/Doppler. According to another feature, each round of coarse range/Doppler processing can be used to generate a list of detections with low resolution, and fine range and Doppler processing can be performed to generate a list of detections with greater resolution.

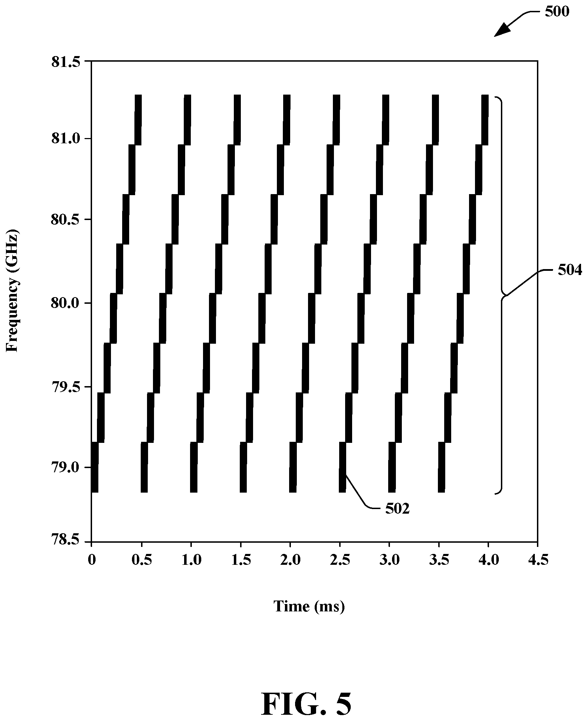

Fig. 5 illustrates a nested FMCW radar chirp waveform 500, in accordance with various features described herein. The waveform shows eight virtual ramps 502, each of which comprise eight ramp groups 504. It will be understood that the waveform 500 is not limited to eight virtual ramps 502, but rather may comprise and more or fewer virtual ramps. It will further be understood that the virtual ramps 502 are not limited to eight ramp groups, but rather may comprise any desired number of ramp groups. In the illustrated example, each ramp group spans approximately 0.3 GHz, and the virtual ramps span approximately 2.4 GHz. However, it will be understood that the ramp groups and virtual ramps can span larger or smaller amounts of bandwidth.

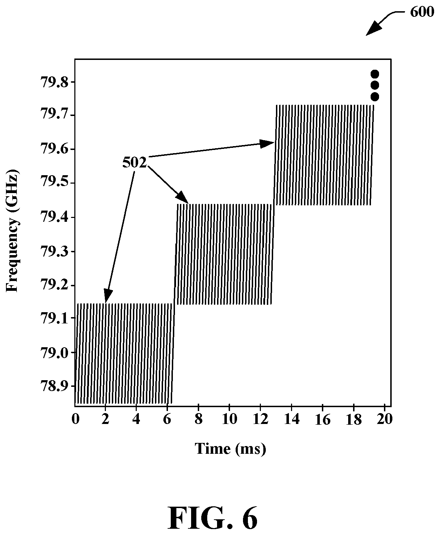

Fig. 6 illustrates an enlarged view 600 of the ramp groups 502, in accordance with various aspects described herein. In the illustrated example, each ramp group 502 comprises 32 ramps. However one of skill in the art will understand that each ramp group may comprise more or fewer than 32 ramps. Each ramp group 502 is transmitted over approximately 0.3 GHz of bandwidth, as described with regard to Fig. 5. However, one of skill in the art will recognize that each ramp group may be transmitted over larger or smaller segments of bandwidth. In one embodiment, each ramp group is allocated an equal amount of bandwidth. In another embodiment, some or all of the ramp groups are allocated different amounts of bandwidth.

With continued reference to Figs. 5 and 6, when processing the ramps of the ramp groups, ADC samples are taken for all ramps in all ramp groups in all virtual ramps. For coarse range and velocity estimation, the ADC samples of the ramps in the ramp groups are used. For fine range and velocity estimation, the output (e.g., range and Doppler cells or maps) of the Fourier processing of the respective ramp groups is used as virtual ADC samples using additional fine Fourier processing.

For instance, in the example illustrated in Fig. 5, each virtual ramp 504 comprises 8 ramp groups 502. Thus for each virtual ramp 504, the fine range FFT would be executed on the coarse range and velocity cell generated for each ramp group, for a total of 8 iterations of the fine range FFT for each virtual ramp 504. Similarly, define velocity FFT would be executed on each coarse range and velocity cell for all virtual ramps 504.

It will be understood that the described aspects are not limited to using 8 virtual ramps 504 or 8 ramp groups 502 per virtual ramp 504. Rather, any desired number of virtual ramps 504 can be employed, and each virtual ramp 504 can comprise any desired number of ramp groups 502. Additionally, each ramp group 502 can comprise any desired number of ramps. Moreover, ramp groups 502 can be allocated any desired amount of bandwidth.

Fig. 7 shows a coarse range and Doppler map 700, such as can be generated after FFT processing of received ramp groups at 406 and 408 of the method 400. The coarse range and Doppler map 700 shows two peaks, respectively labeled with their X, Y, and Z coordinates. Each peak represents a detected object.

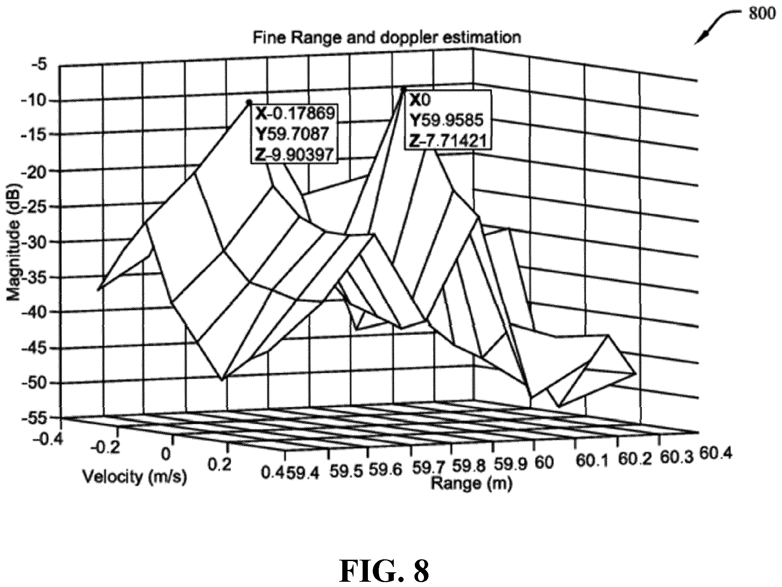

Fig. 8 shows a fine range and Doppler map 800, such as can be generated after FFT processing of the virtual ramps at 410 and 412 of the method 400. The fine range and Doppler map 800 shows two peaks, respectively labeled with their X, Y, and Z coordinates, where each peak represents a detected object.

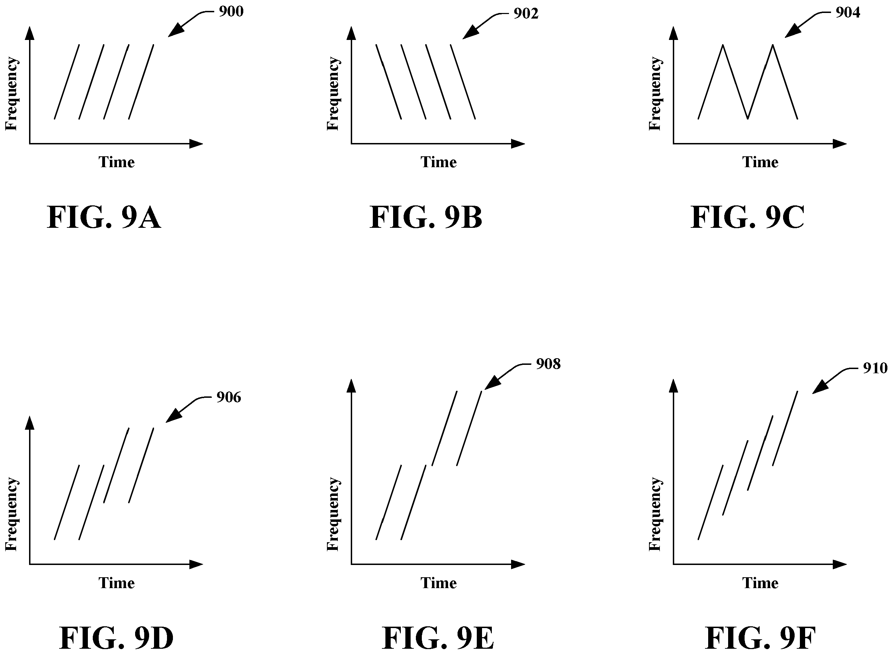

Figs 9A-9G illustrate different examples of FMCW modulation profiles that can be employed in conjunction with the aspects described herein. The modulation form at each stage can be any type of FMCW modulation and can be different for the internal modulation (ramp group) and the external modulation (virtual ramp). Additionally, different radars can use different FMCW modulation profiles to reduce the area of interference between them (frequency/time). Digital modulation waveforms such phase modulation continuous wave (PMCW) and orthogonal frequency division multiplexing (OFDM) can also be used.

Fig. 9A shows a positive sawtooth ramp waveform 900 that can be employed for the ramp groups and/or the virtual ramps described herein.

Fig. 9B shows a negative sawtooth ramp waveform 902 that can be employed for the ramp groups and/or the virtual ramps described herein.

Fig. 9C shows a triangle waveform 904 that can be employed for the ramp groups and/or the virtual ramps described herein.

Fig. 9D shows a partially offset ramp waveform 906 that can be employed for the ramp groups and/or the virtual ramps described herein, where sets of ramps are offset from each other in time and frequency and overlap in frequency.

Fig. 9E shows a fully offset ramp waveform 908 that can be employed for the ramp groups and/or the virtual ramps described herein, where sets of ramps are offset from each other in time and frequency and do not overlap in frequency.

Fig. 9F shows another example of a partially offset ramp waveform 910, that can be employed for the ramp groups and/or the virtual ramps described herein, where individual of ramp are offset from each other in time and frequency and overlap in frequency.

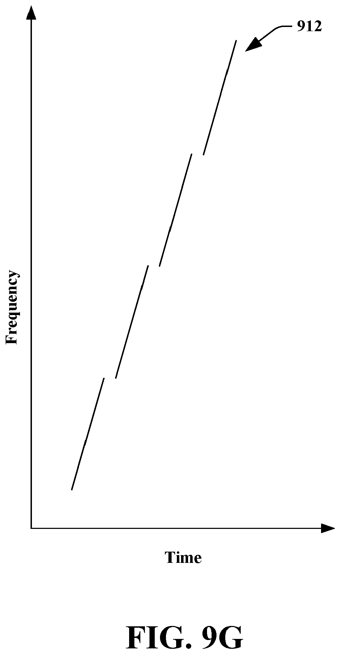

Fig. 9G shows another example of a fully offset ramp waveform 912 that can be employed for the ramp groups and/or the virtual ramps described herein, where individual ramps are offset from each other in time and frequency and do not overlap in frequency.

In one embodiment, the different waveforms shown in Figs. 9A-9G (and/or other waveforms) in different ramp groups within a virtual ramp. For instance, a first ramp group can employ a positive sawtooth waveform 902, a second ramp group can employ a negative sawtooth waveform 904, a third ramp group can employ one of the offset waveforms, etc.

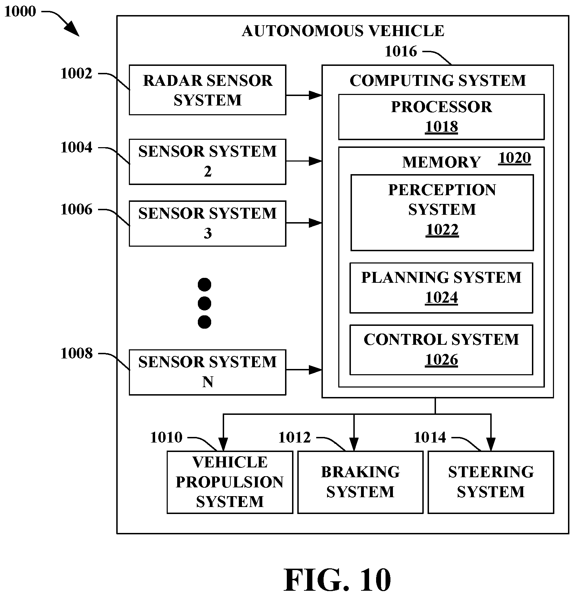

Various technologies described herein are suitable for use in connection with an autonomous vehicle (AV) that employs a radar system to facilitate navigation about roadways. Referring now to Fig. 10, an exemplary AV 1000 is illustrated, wherein the AV 1000 can navigate about roadways without human conduction based upon sensor signals output by sensor systems of the AV 1000. The AV 1000 includes a plurality of sensor systems 1002-1008 (a first sensor system 1002 through an Nth sensor system 1008). The sensor systems 1002-1008 may be of different types. For example, the first sensor system 1002 is a radar sensor system, the second sensor system 1004 may be a lidar sensor system, the third sensor system 1006 may be a camera (image) system, and the Nth sensor system 1008 may be a sonar system. Other exemplary sensor systems include GPS sensor systems, inertial sensor systems, infrared sensor systems, and the like. The various sensor systems 1002-1008 are arranged about the AV 1000. The sensor systems 1002-1008 are configured to repeatedly (e.g., continuously, or periodically) output sensor data that is representative of objects and conditions in the driving environment of the AV 1000.

The AV 1000 further includes several mechanical systems that are used to effectuate appropriate motion of the AV 1000. For instance, the mechanical systems can include but are not limited to, a vehicle propulsion system 1010, a braking system 1012, and a steering system 1014. The vehicle propulsion system 1010 may be an electric engine, an internal combustion engine, or a combination thereof. The braking system 1012 can include an engine brake, brake pads, actuators, a regenerative braking system, and/or any other suitable componentry that is configured to assist in decelerating the AV 1000. The steering system 1014 includes suitable componentry that is configured to control the direction of movement of the AV 1000.

The AV 1000 additionally comprises a computing system 1016 that is in communication with the sensor systems 1002-1008 and is further in communication with the vehicle propulsion system 1010, the braking system 1012, and the steering system 1014. The computing system 1016 includes a processor 1018 and memory 1020 that includes computer-executable instructions that are executed by the processor 1018. In an example, the processor 1018 can be or include a graphics processing unit (GPU), a plurality of GPUs, a central processing unit (CPU), a plurality of CPUs, an application-specific integrated circuit (ASIC), a microcontroller, a programmable logic controller (PLC), a field programmable gate array (FPGA), or the like.

The memory 1020 comprises a perception system 1022, a planning system 1024, and a control system 1026. Briefly, the perception system 1022 is configured to identify the presence of objects and/or characteristics of objects in the driving environment of the AV 1000 based upon sensor data output by the sensor systems 1002-1008. The planning system 1024 is configured to plan a route and/or a maneuver of the AV 1000 based upon data pertaining to objects in the driving environment that are output by the perception system 1022. The control system 1026 is configured to control the mechanical systems 1010-1014 of the AV 1000 to effectuate appropriate motion to cause the AV 1000 to execute a maneuver planned by the planning system 1024.

The perception system 1022 is configured to identify objects in proximity to the AV 1000 that are captured in sensor signals output by the sensor systems 1002-1008. By way of example, the perception system 1022 can be configured to identify the presence of an object in the driving environment of the AV 1000 based upon images generated by a camera system included in the sensor systems 1004-1008. In another example, the perception system 1022 can be configured to determine a presence and position of an object based upon radar data output by the radar sensor system 1002. In exemplary embodiments, the radar sensor system 1002 can be or include the radar sensor 100. In such embodiments, the perception system 1022 can be configured to identify a position of an object in the driving environment of the AV 1000 based upon the estimated range output by the radar sensor 100.

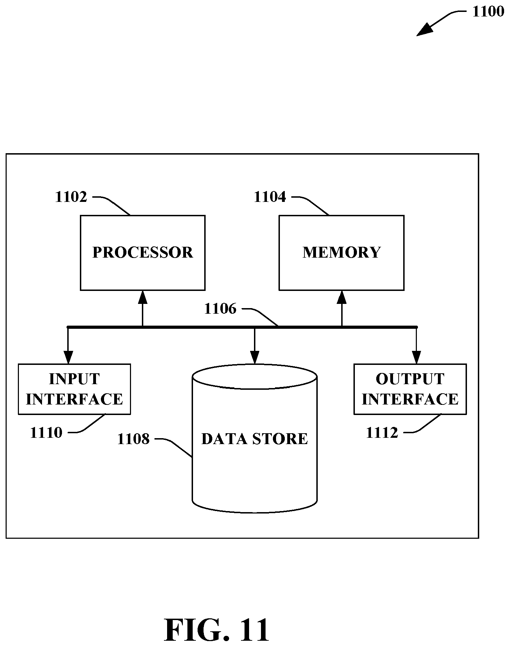

Referring now to Fig. 11, a high-level illustration of an exemplary computing device 1100 that can be used in accordance with the systems and methodologies disclosed herein is illustrated. For instance, the computing device 1100 may be or include the computing system 1016. The computing device 1100 includes at least one processor 1102 that executes instructions that are stored in a memory 1104. The instructions may be, for instance, instructions for implementing functionality described as being carried out by one or more modules, components, or systems discussed above or instructions for implementing one or more of the methods described above. The processor 1102 may be a GPU, a plurality of GPUs, a CPU, a plurality of CPUs, a multi-core processor, a combination of the foregoing, etc. The processor 1102 may access the memory 1104 by way of a system bus 1106. In addition to storing executable instructions, the memory 1104 may also store radar data, beamformed radar data, neural network configurations, etc.

The computing device 1100 additionally includes a data store 1108 that is accessible by the processor 1102 by way of the system bus 1106. The data store 1108 may include executable instructions, radar data, beamformed radar data, embeddings of these data in latent spaces, etc. The computing device 1100 also includes an input interface 1110 that allows external devices to communicate with the computing device 1100. For instance, the input interface 1110 may be used to receive instructions from an external computing device, etc. The computing device 1100 also includes an output interface 1112 that interfaces the computing device 1100 with one or more external devices. For example, the computing device 1100 may transmit control signals to the vehicle propulsion system 1010, the braking system 1012, and/or the steering system 1014 by way of the output interface 1112.

Additionally, while illustrated as a single system, it is to be understood that the computing device 1100 may be a distributed system. Thus, for instance, several devices may be in communication by way of a network connection and may collectively perform tasks described as being performed by the computing device 1100.

Various functions described herein can be implemented in hardware, software, or any combination thereof. If implemented in software, the functions can be stored on or transmitted over as one or more instructions or code on a computer-readable medium. Computer-readable media includes computer-readable storage media. A computer-readable storage media can be any available storage media that can be accessed by a computer. By way of example, and not limitation, such computer-readable storage media can comprise RAM, ROM, EEPROM, CD-ROM or other optical disk storage, magnetic disk storage or other magnetic storage devices, or any other medium that can be used to store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal is not included within the scope of computer-readable storage media. Computer-readable media also includes communication media including any medium that facilitates transfer of a computer program from one place to another. A connection, for instance, can be a communication medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communication medium. Combinations of the above should also be included within the scope of computer-readable media.

Alternatively, or in addition, the functionally described herein can be performed, at least in part, by one or more hardware logic components. For example, and without limitation, illustrative types of hardware logic components that can be used include FPGAs, ASICs, Application-specific Standard Products (ASSPs), SOCs, Complex Programmable Logic Devices (CPLDs), etc.

Described herein are various technologies according to at least the following examples.

(A1) In an aspect, a radar sensor includes a receive antenna that receives a radar return, and one or more processors configured to perform certain acts. The acts include receiving a radar signal from the radar antenna comprising a nested frequency modulated continuous wave (N-FMCW) waveform, wherein the N-FMCW waveform comprises a plurality of virtual ramps, each virtual ramp comprising a plurality of ramp groups. The acts further include sampling the N-FMCW waveform to obtain analog-to-digital (ADC) samples. The acts also include performing coarse range estimation and coarse velocity estimation for a detected object using ADC samples from ramps in the ramp groups. Additionally, the acts include performing fine range estimation and fine velocity estimation using the output of the coarse range estimation and the coarse velocity estimation. The acts also include outputting a coarse range and velocity map generated from the coarse range estimation information and the velocity estimation information. The acts further include outputting a fine range and velocity map generated from the fine range estimation information and the velocity estimation information.

(A2) In some embodiments of the radar sensor of (A1), the acts further include performing a coarse range fast Fourier transform (FFT) on the ADC samples for ramps in respective ramp groups in respective virtual ramps to generate the coarse range estimation information.

(A3) In some embodiments of the radar sensor of (A2), the acts further include performing a coarse velocity FFT on ramps in respective ramp groups to generate the coarse velocity estimation information.

(A4) In some embodiments of the radar sensor of (A3), the acts further include performing a fine range FFT on ramp groups in respective virtual ramps to generate the fine range estimation information.

(A5) In some embodiments of the radar sensor of (A4), the acts further include performing a fine velocity FFT on respective virtual ramps to generate the fine velocity estimation information.

(A6) In some embodiments of the radar sensor of at least one of (A1)-(A5), at least one of the coarse range estimation, the coarse velocity estimation, the fine range estimation, or the fine velocity estimation is performed using a discrete Fourier transform (DFT).

(A7) In some embodiments of the radar sensor of at least one of (A1)-(A6), the virtual ramps and the ramps in the ramp groups employ different waveforms.

(A8) In some embodiments of the radar sensor of at least one of (A1)-(A7), ramp groups within a given virtual ramp are received on different bandwidth segments.

(A9) In some embodiments of the radar sensor of at least one of (A1)-(A8), ramp groups within a given virtual ramp employ different waveforms.

(B1) In another aspect, a radar sensor includes a transmit antenna configured to transmit a nested frequency modulated continuous wave (N-FMWC) radar waveform. The radar sensor also includes one or more processors configured to perform certain acts. The acts include generating the N-FMWC radar waveform by generating a plurality of ramp groups respectively comprising a predetermined number of ramps having a predetermined pulse rate interval (PRI) and occupying a predetermined amount of bandwidth. The acts also include, when generating the N-FMWC radar waveform, generating a plurality of virtual ramps respectively comprising two or more of the plurality of ramp groups.

(B2) In some embodiments of the radar sensor of (B 1), the virtual ramps comprise the same number of ramp groups.

(B3) In some embodiments of the radar sensor of at least one of (B 1)-(B2), the contiguous ramp groups of a given virtual ramp occupy different segments of bandwidth.

(B4) In some embodiments of the radar sensor of at least one of (B 1)-(B3), the virtual ramps have a different waveform than the ramps in the ramp groups.

(B5) In some embodiments of the radar sensor of at least one of (B 1)-(B4), the different ramp groups within a virtual ramp have different waveforms.

(C1) in another aspect, a radar sensor includes a transmit antenna that transmits a nested frequency modulated continuous wave (N-FMCW) radar waveform toward a target. The radar sensor also includes a receive antenna that receives a radar return. The radar sensor further includes a hardware logic component that is configured to perform certain acts. The acts include generating the N-FMCW radar waveform for transmission by the transmit antenna. The acts also include receiving from the receive antenna a radar signal comprising the N-FMCW waveform. The acts further include sampling the N-FMCW waveform to obtain analog-to-digital (ADC) samples. Additionally, the acts include performing coarse range estimation and coarse velocity estimation for a detected object using ADC samples from ramps in the ramp groups. The acts also include performing fine range estimation and fine velocity estimation using the output of the coarse range estimation and the coarse velocity estimation. The acts further include outputting a coarse range and velocity map generated from the coarse range estimation and the coarse velocity estimation information. Additionally, the acts include outputting a fine range and velocity map generated from the fine range estimation and the fine velocity estimation information.

(C2) In some embodiments of the radar sensor of (C 1), generating the N-FMCW radar waveform includes generating a plurality of ramp groups respectively comprising a predetermined number of ramps having a predetermined pulse rate interval (PRI) and occupying a predetermined amount of bandwidth. Generating the N-FMCW radar waveform also includes generating a plurality of virtual ramps respectively comprising two or more of the plurality of ramp groups.

(C3) In some embodiments of the radar sensor of at least one of (C1)-(C2), performing coarse range and velocity estimation includes performing a coarse range fast Fourier transform (FFT) on the ADC samples for ramps in respective ramp groups in respective virtual ramps to generate coarse range information. Performing coarse range and velocity estimation also includes performing a coarse velocity FFT on ramps in respective ramp groups to generate coarse velocity information.

(C4) In some embodiments of the radar sensor of at least one of (C1)-(C3), performing fine range and velocity estimation includes performing a fine range FFT on ramp groups in respective virtual ramps to generate fine range information. Performing fine range and velocity estimation also includes performing a fine velocity FFT on respective virtual ramps to generate fine velocity information.

(C5) In some embodiments of the radar sensor of at least one of (C1)-(C4), at least one of the coarse range estimation, the coarse velocity estimation, the fine range estimation, or the fine velocity estimation is performed using a discrete Fourier transform (DFT).

(C6) In some embodiments of the radar sensor of at least one of (C1)-(C5), the virtual ramps and the ramps in the ramp groups employ different waveforms.

What has been described above includes examples of one or more embodiments. It is, of course, not possible to describe every conceivable modification and alteration of the above devices or methodologies for purposes of describing the aforementioned aspects, but one of ordinary skill in the art can recognize that many further modifications and permutations of various aspects are possible. Accordingly, the described aspects are intended to embrace all such alterations, modifications, and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

## Claims

1. A radar sensor comprising:
a receive antenna that receives a radar return; and
one or more processors configured to perform acts comprising:
receiving a radar signal from the radar antenna comprising a nested frequency modulated continuous wave (N-FMCW) waveform, wherein the N-FMCW waveform comprises a plurality of virtual ramps, each virtual ramp comprising a plurality of ramp groups;
sampling the N-FMCW waveform to obtain analog-to-digital (ADC) samples;
performing coarse range estimation and coarse velocity estimation for a detected object using ADC samples from ramps in the ramp groups;
performing fine range estimation and fine velocity estimation using the output of the coarse range estimation and the coarse velocity estimation;
outputting a coarse range and velocity map generated from the coarse range estimation information and the velocity estimation information; and
outputting a fine range and velocity map generated from the fine range estimation information and the velocity estimation information.

2. The radar sensor of claim 1, wherein the acts further comprise performing a coarse range fast Fourier transform (FFT) on the ADC samples for ramps in respective ramp groups in respective virtual ramps to generate the coarse range estimation information.

3. The radar sensor of claim 2, wherein the acts further comprise performing a coarse velocity FFT on ramps in respective ramp groups to generate the coarse velocity estimation information.

4. The radar sensor of claim 3, wherein the acts further comprise performing a fine range FFT on ramp groups in respective virtual ramps to generate the fine range estimation information.

5. The radar sensor of claim 4, wherein the acts further comprise performing a fine velocity FFT on respective virtual ramps to generate the fine velocity estimation information.

6. The radar sensor of any one of claims 1-5, wherein at least one of the coarse range estimation, the coarse velocity estimation, the fine range estimation, or the fine velocity estimation is performed using a discrete Fourier transform (DFT).

7. The radar sensor of any one of claims 1-6, wherein the virtual ramps and the ramps in the ramp groups employ different waveforms.

8. The radar sensor of any one of claims 1-7, wherein ramp groups within a given virtual ramp are received on different bandwidth segments.

9. The radar sensor of any one of claims 1-8, wherein ramp groups within a given virtual ramp employ different waveforms.

10. A radar sensor comprising:
a transmit antenna configured to transmit a nested frequency modulated continuous wave (N-FMWC) radar waveform; and
one or more processors configured to perform acts comprising:
generating the N-FMWC radar waveform by:
generating a plurality of ramp groups respectively comprising a predetermined number of ramps having a predetermined pulse rate interval (PRI) and occupying a predetermined amount of bandwidth; and
generating a plurality of virtual ramps respectively comprising two or more of the plurality of ramp groups.

11. The radar sensor of claim 10, wherein the virtual ramps comprise the same number of ramp groups.

12. The radar sensor of any one of claims 10-11, wherein the contiguous ramp groups of a given virtual ramp occupy different segments of bandwidth.

13. The radar sensor of any one of claims 10-12, wherein the virtual ramps have a different waveform than the ramps in the ramp groups.

14. The radar sensor of any one of claims 10-13, wherein the different ramp groups within a virtual ramp have different waveforms.

15. The radar sensor of any one of claims 10-14, employed in an autonomous vehicle.
